# EUROPÄISCHE PATENTSCHRIFT

(11) **EP 4 479 221 B1**
(45) Veröffentlichungstag und Bekanntmachung des Hinweises auf die Patenterteilung: **18.03.2026**
(21) Anmeldenummer: 23719271.1
(22) Anmeldetag: 16.02.2023
(51) Int. Cl.: B23Q 1/32, B25B 5/06, B25B 11/00

(54) **KUGELSPANNER**
SPHERICAL CLAMP
MANDRIN À BILLE

(30) Priorität: 17.02.2022 DE 102022103709
(43) Veröffentlichungstag der Anmeldung: 25.12.2024
(73) Patentinhaber: ZeroClamp GmbH, 83052 Bruckmühl (DE)
(72) Erfinder: HOFMANN, Klaus, 85567 Bruck (DE)
(74) Vertreter: Eder Schieschke & Partner mbB
(86) Internationale Anmeldenummer: PCT/DE2023/100128
(87) Internationale Veröffentlichungsnummer: WO 2023/155955

(56) Entgegenhaltungen:
- WO-A1-2021/000977
- DE-A1- 102005 033 468
- DE-C1- 19 938 242
- KR-A- 20100 037 857
- KR-B1- 101 118 958
- US-A1- 2008 000 346

## Beschreibung

Die vorliegende Erfindung betrifft einen Kugelspanner zum lösbaren Einspannen von Werkstücken.

Häufig ist es erforderlich, Werkstücke auf die Einhaltung vorgegebener Sollmaße zu bearbeiten, wozu sie meist mithilfe von Spannmitteln eingespannt werden, beispielsweise in einem Maschinenbett. Dabei kann es vorkommen, dass im Werkstück eingeschlossene Eigenspannungen durch die Bearbeitung frei werden und danach trachten, das eingespannte Werkstück zum Ausgleich dieser Eigenspannungen zu verformen. Werden die Spannmittel gelöst, vollzieht sich diese Verformung, und das verformte Werkstück muss zur Bearbeitung auf Sollmaß erneut eingespannt und nachbearbeitet werden. Das erneute Einspannen - insbesondere wenn mehrere Spannmittel an verschiedenen Abschnitten des Werkstücks eingesetzt sind - ist sehr aufwendig, denn aufgrund der Verformung verändert sich in der Regel die räumliche Lage der Angriffspunkte der Spannmittel am Werkstück zueinander und/oder zu einem unveränderlichen Bezugspunkt. Die Spannmittel müssen darauf jeweils eingestellt werden.

Aus der WO 2021/000977 A1 ist eine Vorrichtung zum lösbaren Fixieren eines Werkstücks nebst zugehörigem Verfahren bekannt. Dabei wird eine kugelförmige, mehrteilige Lagerkugel, die zentrisch von einer zu klemmenden Welle durchdrungen wird, über pneumatisch betätigbare Klemmelemente radial beaufschlagt, um die Welle zu klemmen. Im geklemmten Zustand ist die Welle aber nur schlecht gegen ein Verschieben gesichert.

Aufgabe der Erfindung war es daher, ein Spannmittel und ein Verfahren zu seiner Verwendung bereitzustellen, welches das (erneute) Einspannen eines Werkstücks sowie die Berücksichtigung von Verformungen aufgrund von Eigenspannungen bei der Bearbeitung vereinfacht und beschleunigt.

Die Aufgabe wird gelöst durch einen Kugelspanner nach Anspruch 1 oder ein Verfahren nach Anspruch 7. Weitere vorteilhafte Ausführungsformen ergeben sich aus den Unteransprüchen.

Die Erfindung geht zunächst von der Beobachtung aus, dass Werkstücke durch ihre Bearbeitung Eigenspannungen freisetzen können, die nicht ausgeglichen werden, solange das Werkstück nach der Bearbeitung noch eingespannt bleibt (Spannlage). Nach dem Lösen der Spannmittel vollziehen einzelne Werkstückabschnitte so weit eine Verdrehung und/oder Verschiebung relativ zu ihrer vorherigen Lage, bis sie durch die Verformung und den damit einhergehenden Abbau oder Ausgleich der Spannungen eine neue Position und Lage im Raum einnehmen (Ausgleichslage). Die Erfindung basiert auf der Idee, diese Ausgleichsbewegungen von der Spannlage in die Ausgleichslage in einem gelösten Zustand des Spannmittels mitzuvollziehen, um nach anschließendem Übergang in einen geklemmten Zustand das Werkstück in der Ausgleichslage wieder fixieren zu können und dadurch das erneute Einspannen zu vereinfachen.

Das erfindungsgemäße Spannmittel ist ein Kugelspanner nach Anspruch 1. Der Kugelspanner umfasst ein Befestigungsmittel, welches mit dem Werkstück verbindbar ist, um es relativ zum Kugelspanner positionieren und fixieren zu können. Das Befestigungsmittel ist mit weiteren Elementen des Kugelspanners gekoppelt und in einem gelösten Zustand relativ zu diesen Komponenten beweglich, in einem geklemmten Zustand hingegen unbeweglich. Der Kugelspanner selbst kann in einem Maschinenbett angeordnet beziehungsweise eingespannt werden und dort verbleiben, ohne seine Position ändern zu müssen, selbst wenn das Werkstück sich zum Abbau von Eigenspannungen verformt und das Befestigungsmittel diese Relativbewegung mitvollzieht.

Der erfindungsgemäße Kugelspanner umfasst dazu eine um eine Achse ausgebildete Welle, die an einem Ende das Befestigungsmittel aufweist, um darüber mit dem einzuspannenden Werkstück verbunden zu werden. Weiterhin umfasst der Kugelspanner eine Kugelklemme, die mit einer Innenseite unmittelbar oder über Klemmbacken an einem zylindrischen Abschnitt der Welle anliegt. Die Kugelklemme kann mit ihrer zur Welle gerichteten Innenseite an der zylindrischen Oberfläche der Welle - vorzugsweise mit geringem radialem Spiel - entlanggleiten. Die Außenseite der Kugelklemme ist sphärisch geformt um einen gedachten, auf der Achse der Welle liegenden Mittelpunkt.

Auf ihrer Außenseite ist die Kugelklemme umgeben von einer Kugelpfanne, die mit ihrer (bevorzugt ebenfalls sphärischen) Innenseite an der sphärischen Außenseite der Kugelklemme anliegt - vorzugsweise ebenfalls mit geringem radialem Spiel. Vorzugsweise haben die sphärische Innenseite der Kugelpfanne und die sphärische Außenseite der Kugelklemme denselben Krümmungsmittelpunkt M. Die Innenseite der Kugelpfanne kann auf der sphärischen Außenseite der Kugelklemme mehrachsig gleiten und dadurch beliebige Schwenkbewegungen der Kugelklemme relativ zur Kugelpfanne ermöglichen.

Erfindungsgemäß ist der Kugelspanner, insbesondere dessen Kugelpfanne, aus einem geklemmten Zustand entlang bzw. entgegen einer Klemmrichtung X in einen gelösten Zustand und zurück bewegbar, um dadurch eine Klemmkraft auf die Kugelklemme und die Welle auszuüben oder zu lösen. Im gelösten Zustand ist die Welle relativ zur Kugelklemme verschieblich, vorzugsweise auch drehbar, und die Kugelklemme ihrerseits lässt sich relativ zur Kugelpfanne um den Mittelpunkt M schwenken. Im geklemmten Zustand hingegen übt die Kugelpfanne in radialer Richtung eine Anpresskraft auf die innenliegende Kugelklemme aus, die ihrerseits dadurch die Welle in radialer Richtung klemmt. Eine Relativbewegung zwischen Kugelpfanne, Kugelklemme und Welle ist dann aufgrund der aus der Anpresskraft erzeugten Reibkraft zwischen den miteinander verklemmten Komponenten nicht mehr möglich.

Im Ergebnis lässt sich die Welle im gelösten Zustand entlang ihrer Achse verschieben und um die Achse schwenken, und darüber hinaus auch beliebig um den Mittelpunkt M schwenken. Diese Eigenschaft macht sich die Erfindung zu Nutze, um Ausgleichsbewegungen des Werkstücks von der Spannlage in die Ausgleichslage zu ermöglichen, während das Werkstück über das Befestigungsmittel mit dem Kugelspanner verbunden bleibt. Nach Einnahme der Ausgleichslage kann die Welle mit dem von ihr zu tragenden Werkstück durch erneutes Erzeugen der Klemmkraft einfach und schnell wieder fixiert werden, wie nachfolgend noch zu sehen sein wird.

Die Kugelklemme muss so ausgebildet sein, dass sie eine durch die Kugelpfanne auf sie ausgeübte Klemmkraft an die innenliegende Welle weitergeben kann. Dazu ist es erforderlich, dass Abschnitte der Kugelklemme eine gewisse, wenn auch minimale radiale Bewegung vollziehen können, um die Welle sicher klemmen zu können. In einem besonders einfachen Fall kann die Kugelklemme gebildet werden mit einem nahezu kugelförmigen Körper mit einer zentrischen Durchgangsbohrung zur Aufnahme der Welle, wobei der kugelförmige Körper in Umfangsrichtung wenigstens einen Schlitz aufweist, der eine elastische Verformung des Körpers in Umfangsrichtung und damit auch in radialer Richtung zulässt, wenn er auf seiner Außenseite mit einer Anpresskraft beaufschlagt wird.

Alternativ und bevorzugt umfasst die Kugelklemme mehrere, teilweise oder vollständig voneinander getrennte, vorzugsweise gleichmäßig in Umfangsrichtung um die Welle herum angeordnete Kugelklemmelemente. Jedes dieser Kugelklemmelemente weist auf seiner Innenseite eine zylinderförmige Fläche zur Anlage an der Welle auf, wobei diese Fläche auch gebildet werden kann durch oder mithilfe von Klemmbacken, um eine besonders gute Klemmwirkung zu erzielen. Auf der Außenseite ist jedes Kugelklemmelement mit einem sphärischen Flächenabschnitt versehen, der auf der Innenseite der Kugelpfanne gleiten und dabei um den Mittelpunkt M schwenken kann. Einzelne, voneinander getrennte oder trennbare Kugelklemmelemente lassen sich beispielsweise zu Wartungszwecken leicht austauschen und ermöglichen den einfachen Zugang zu den innen liegenden Klemmbacken, sofern vorhanden.

Erfindungsgemäß wird auch die Kugelpfanne gebildet durch mehrere, teilweise oder vollständig voneinander getrennte, in Umfangsrichtung um die Kugelklemme herum angeordnete Kugelpfannenelemente. Jedes dieser Kugelpfannenelemente weist eine sphärisch geformte Innenseite zur Anlage an der Kugelklemme bzw. ihren einzelnen Kugelklemmelementen auf, gegebenenfalls ausgestattet mit Klemmbacken zur besonders sicheren Kraftübertragung. Auf ihrer Außenseite sind die einzelnen Kugelpfannenelemente bevorzugt mit Kopplungsmitteln versehen zur Aufnahme der in sie eingeleiteten Klemmkraft.

Die Klemmkraft kann beispielsweise über pneumatische, hydraulisch oder elektromechanisch betätigte Spannmittel auf die Kugelpfanne bzw. deren Kugelpfannenelemente eingebracht werden. Grundsätzlich kann es genügen, die Kugelpfanne nur in eine Richtung mit einer Klemmkraft zu beaufschlagen, um die gewünschte Klemmwirkung zwischen Kugelpfanne, Kugelklemme und Welle zu erzeugen. Vorzugsweise ist die Klemmkraft dabei zur Wellenachse oder zum Mittelpunkt M gerichtet.

Eine besonders wirksame Alternative sieht hingegen vor, die Klemmkraft entlang eines Umfangs allseitig in radialer Richtung auf die Kugelpfanne auszuüben, sodass diese über ihren gesamten Umfang radial nach innen gedrängt wird, um eine homogene Klemmwirkung zu erzielen und insbesondere einen seitlichen Versatz der Welle bei nur einseitiger Beaufschlagung zu vermeiden. Erfindungsgemäß ist die Kugelpfanne dazu ausgebildet, die Kugelklemme gleichzeitig oberhalb und unterhalb einer Äquatorebene zu beaufschlagen, sodass sich insgesamt eine dreidimensionale Beaufschlagung bzw. Verformung der Kugelpfanne (und entsprechend auch der Kugelklemme) in radialer Richtung nach innen zur Welle hin ergibt. Eine möglichst große Kontaktfläche zwischen Kugelpfanne, Kugelklemme und Welle bewirkt bei geeignet großer Klemmkraft eine besonders sichere Arretierung der Komponenten relativ zueinander.

Eine besonders vorteilhafte Ausführungsform des Kugelspanners enthält zur Erzeugung der Klemmkraft Spannmittel in Form von einer, bevorzugt mehreren Radialfedern, die beispielsweise hydraulisch, vorzugsweise jedoch pneumatisch betätigt werden können. Dazu umfasst der Kugelspanner ein Gehäuse, welches vorzugsweise im Wesentlichen rotationssymmetrisch um eine zentrische Achse Z₀ ausgebildet ist. Das Gehäuse ist dazu ausgebildet, an einem Maschinenbett befestigt zu werden, um mithilfe der Maschine ein vom Kugelspanner gehaltenes Werkstück zu bearbeiten. Im Gehäuse sind die Radialfedern um die Gehäuseachse herum angeordnet. Sie enthalten jeweils eine von Federelementen umschlossene Kammer, die mit einem Fluid, insbesondere Druckluft, beaufschlagbar ist. Unter Druckbeaufschlagung dehnt sich die Kammer in einer Richtung parallel zur Gehäuseachse aus und verkürzt zugleich ihre Ausdehnung orthogonal dazu, also in radialer Richtung. Diese Ausdehnung erfolgt gegen eine der Radialfeder innewohnende Federkraft, welche danach trachtet, die Feder in ihre radial ausgedehnte Ausgangslage zurück zu verformen. Bei Druckabfall dehnt sich die Radialfeder daher - ihrer Federkraft folgend - in radialer Richtung wieder aus. Stützt sich die Radialfeder dabei entlang ihres Außenumfangs an einer Innenwand des Gehäuses ab, so bewegt sich ihr Innenumfang je nach Druckbeaufschlagung um ein Maß in Richtung auf die zentrische Gehäuseachse zu oder davon weg. Je nach Ausgestaltung der Radialfedern und ihrer Federkraft können dabei am Innenumfang hohe Kräfte in radialer Richtung erzeugt werden.

Erfindungsgemäß steht die wenigstens eine Radialfeder mit ihrem Innenumfang bzw. einem Abschnitt davon in Wirkverbindung mit der Kugelpfanne. Im geklemmten Zustand erzeugt die Radialfeder eine radial nach innen gerichtete Klemmkraft auf die Kugelpfanne, wodurch die von der Kugelpfanne dabei beaufschlagte Kugelklemme ihrerseits die von der Kugelklemme umfasste Welle klemmt. Die zwischen Kugelpfanne, Kugelklemme und Welle mittels Klemmkraft erzeugten Reibkräfte stellen dabei sicher, dass die Welle relativ zum Gehäuse sowohl gegen Drehbewegungen um die Wellenachse als auch gegen Schwenkbewegungen um den Mittelpunkt und gegen Verschiebungen in Richtung der Wellenachse gesichert eingespannt ist - ihre Position und Lage im Raum ist dann festgelegt. Wird die Klemmkraft dagegen aufgehoben durch Druckbeaufschlagung und daraus folgende radiale Kontraktion der Radialfeder (gelöster Zustand), lässt sich die Welle in den vorgenannten Richtungen frei bewegen und neu ausrichten.

Erfindungsgemäß soll sichergestellt sein, dass die Welle im geklemmten Zustand spielfrei gehalten wird. Insbesondere geringe Beweglichkeit bzw. Spiel entlang der Wellenachse soll verhindert werden. Da die Kugelklemme bzw. deren einzelne Elemente ebenso wie die Kugelpfanne oder die einzelnen Kugelpfannenelemente beim Klemmen (geringfügig) radial nach innen zur Welle gedrückt und dabei evtl. leicht verformt werden, muss sichergestellt sein, dass sich aus dieser radialen Einwärtsbewegung bzw. Verformung möglichst kein axiales Spiel der Kugelklemme und der Kugelpfanne relativ zum Gehäuse ergibt, wodurch wiederum die Welle selbst - obwohl geklemmt - ebenfalls geringes Spiel hätte. Erfindungsgemäß ist vorgesehen, die auf die Kugelklemme einwirkende Kugelpfanne bei ihrer Bewegung zwischen dem geklemmten und dem gelösten Zustand entlang wenigstens einer Anschlagfläche zu führen, sodass die Kugelpfanne senkrecht zu dieser Bewegungsrichtung (Klemmrichtung X) nicht ausweichen kann. Diese Führung verhindert - insbesondere wenn sie beidseitig oberhalb und unterhalb der Kugelpfanne vorgesehen ist - einerseits das Ausweichen (Spiel) der Kugelpfanne (samt Kugelklemme und Welle) senkrecht zur Klemmrichtung. Zum anderen wird auch ein Aufweiten der Kugelpfanne senkrecht zur Klemmrichtung bzw. Abflachen in Klemmrichtung verhindert, wenn die Kugelpfanne wenigstens einseitig durch eine Anschlagfläche gestützt und in Form gehalten wird.

Da die Kugelpfanne oder die Pfannenelemente sphärische Innenflächen aufweisen, in welche die Kugelklemme oder deren Elemente mit ihren Außenflächen (vorzugsweise komplementär) eingreifen, wird im geklemmten Zustand durch die entlang der Anschlagfläche erfolgende Führung der Kugelpfanne oder ihrer Pfannenelemente auch die Kugelklemme spielfrei fixiert, sodass auch die Welle selbst kein axiales Spiel hat.

Konstruktiv ist für diese Führung erfindungsgemäß wenigstens eine Anschlagfläche H vorgesehen, entlang derer die Kugelpfanne oder einzelne Kugelpfannenelemente in Klemmrichtung X gleiten bzw. geführt werden. Die Anschlagfläche verläuft entlang der Klemmrichtung X, vorzugsweise als Ebene orthogonal zur Gehäuseachse Z₀. Sie kann als Anschlagfläche im bzw. am Gehäuse des Kugelspanners ausgebildet sein. In einem im Wesentlichen rotationssymmetrisch ausgebildeten Gehäuse kann die Anschlagfläche als eine die Gehäuseachse Z₀ umlaufende Stufe bzw. Absatz ausgebildet sein (Bei mehreren um die die Gehäuseachse Z₀ umlaufend angeordneten Kugelpfannenelementen ist jedem Element eine eigene, jeweils radial nach innen verlaufende Klemmrichtung X zugeordnet.)

Bevorzugt sind zwei einander in axialer Richtung gegenüberliegende, insbesondere eben und parallel zueinander verlaufende Anschlagflächen vorgesehen, zwischen denen die Kugelpfanne bzw. deren einzelne Kugelpfannenelemente in radialer Richtung spielfrei geführt werden. Erfindungsgemäß umfasst die Kugelpfanne mehrere, in Richtung der Gehäuseachse Z₀ übereinander liegende Kugelpfannenelemente. Diese können zwischen sich ebenfalls Anschlagflächen H' ausbilden, um sich gegenseitig in axialer Richtung zu stützen bzw. stabilisieren.

Vorzugsweise umfasst das an der Welle angeordnete Befestigungsmittel ein Lager zur Aufnahme von Schwenkbewegungen, die das Werkstück beim Übergang von der Spannlage in die Ausgleichslage relativ zur Welle vollzieht. Bevorzugt handelt es sich dabei um ein reines Schwenklager, welches keine Verschiebungen zulässt. Insbesondere kann es sich um ein Kugelgelenk oder einen gleichartig wirkenden (Metall-)Balg handeln. Ein Abschnitt des Gelenks ist mit der Welle verbunden, während der relativ zur Welle verschwenkbare Abschnitt zur Befestigung am Werkstück ausgebildet ist, beispielsweise in Form eines Fixierzapfens, der mit dem Werkstück verschraubt oder in anderer Weise verbunden sein kann.

Ein solches Schwenklager in Kombination mit dem aus Kugelpfanne, Kugelklemme und darin verschiedentlicher Welle gebildeten zweiten Lager ermöglicht im gelösten Zustand die völlig freie Bewegung des Werkstücks aus der Spannlage in die Ausgleichslage nebst anschließender einfacher Fixierung. Das aus dem Stand der Technik bekannte umständliche und aufwendige erneute Einspannen eines bearbeiteten Werkstücks nach dessen Verformung, häufig unter Ausrichtung und Betätigung einer Vielzahl einzelner Spannelemente, kann so vorteilhaft beschleunigt und automatisiert werden. Das wird besonders deutlich aus nachstehender Schilderung des erfindungsgemäßen Verfahrens unter Verwendung wenigstens eines erfindungsgemäßen Kugelspanners.

Dabei wird ein zu bearbeitendes Werkstück von einem Kugelspanner eingespannt, der seinerseits von einem Maschinenbett getragen bzw. mit diesem verspannt ist. Das Befestigungsmittel an der Welle des Kugelspanners ist mit dem Werkstück verbunden und wird im geklemmten Zustand des Kugelspanners relativ zum Maschinenbett fixiert (dabei wird davon ausgegangen, dass das Werkstück im Maschinenbett an mindestens einem weiteren Angriffspunkt von mindestens einem weiteren Kugelspanner oder einem festen Spannmittel getragen wird, sodass dadurch auch Schwenkbewegungen des Werkstücks um das als Schwenklager ausgebildete Befestigungsmittel an der Welle des Kugelspanners unterbunden werden. Das Werkstück könnte in dieser Lage zunächst spannungsfrei eingespannt und dann bearbeitet worden sein, wodurch Eigenspannungen frei werden können, die das Werkstück verformen würden, wenn es nicht in der Spannlage mit dem Kugelspanner verspannt wäre. Die Eigenspannungen wirken dann zusätzlich zu möglichen Spannkräften auf den Kugelspanner ein.

Ein erster erfindungsgemäßer Verfahrensschritt a) sieht vor, dass der Kugelspanner aus dem klemmenden in den gelösten Zustand überführt wird, um es dem Werkstück oder einem Werkstückabschnitt zu ermöglichen, sich ausgehend von der im geklemmten Zustand gegebenen Spannlage selbsttätig relativ zum betreffenden Kugelspanner in eine Ausgleichslage zu verformen bzw. zu bewegen und dadurch die zwischen Werkstück und dem Kugelspanner herrschenden Spannungen zu reduzieren oder aufzuheben. Der klemmende Zustand könnte beispielsweise gelöst werden durch Druckbeaufschlagung einer oder mehrerer Radialfedern, die durch radiale Kontraktion die im geklemmten Zustand erzeugte Klemmkraft auf die Kugelpfanne, die Kugelklemme und die Welle aufheben. In diesem Zustand ist die Welle mit ihrem daran fest verbundenen Teil des Befestigungsmittels relativ zum Maschinenbett frei schwenkbar und verschieblich. Der mit dem Werkstück verbundene Teil des Befestigungsmittels, beispielsweise ein relativ zur Welle nicht verschieblicher aber verschwenkbarer Fixierzapfen, kann so die Ausgleichsbewegung des Werkstücks beim Übergang von der Spannlage in die Ausgleichslage in eine beliebige Drehlage und Position im Raum mitvollziehen. Die im gelösten Zustand dann schwenkbar und verschieblich im Kugelspanner gelagerte Welle kann sich - den Bewegungen des Werkstücks bzw. des Befestigungselements folgend - in eine neue Position und Schwenklage relativ zum Gehäuse des Kugelspanners bzw. zum Maschinenbett mitbewegen. Die Welle übernimmt dabei quasi selbsttätig die Neuausrichtung von Spannmitteln, die im Stand der Technik manuell und unter erheblichem Zeitaufwand durchgeführt werden, um ein sich verformendes Werkstück wieder einspannen zu können.

Einschränkungen dieser Ausgleichsbewegungen wären allenfalls durch konstruktive Randbedingungen gegeben, zum Beispiel den maximal möglichen Schwenkwinkel des Befestigungsmittels oder der Kugelklemme bzw. einen maximalen Verschiebeweg der Welle entlang der Kugelklemme. Da die Eigenspannungen - je nach Größe des Werkstücks - in der Regel aber durch Ausgleichsbewegungen in der Größenordnung von wenigen Millimetern oder Zehntelmillimetern abgebaut werden, sind solche Einschränkungen eher theoretischer Natur.

Die Ausgleichsbewegung kann erfindungsgemäß erfolgen, ohne das Werkstück vollständig von dem einen oder den mehreren Kugelspannern zu lösen. Insbesondere ist kein Zugang zum Maschinenbett oder sonstiger manueller Aufwand erforderlich, um die Verformung des Werkstücks in die Ausgleichslage zu ermöglichen. Stattdessen kann dies alleine durch Überführung der betroffenen Kugelspanner in den gelösten Zustand geschehen, was beispielsweise durch eine weitestmöglich automatisierte Druckbeaufschlagung der Radialfedern bewirkt werden kann. Dies stellt eine erhebliche Vereinfachung und Beschleunigung des Bearbeitungsverfahrens dar.

Das erfindungsgemäße Verfahren lässt sich erweitern durch einen zusätzlichen Verfahrensschritt b), der sich an die Überführung des Werkstücks in die Ausgleichslage anschließt. Dabei wird wenigstens einer der zuvor gelösten Kugelspanner wieder zurück in den geklemmten Zustand überführt, um das Werkstück in der neu eingenommenen Ausgleichslage relativ zum Maschinenbett wieder zu fixieren. Dies lässt sich mithilfe des erfindungsgemäßen Kugelspanners ebenfalls besonders einfach und automatisiert bewirken, indem zum Beispiel die vorherige Druckbeaufschlagung der Radialfedern aufgehoben wird, sodass diese sich in radialer Richtung zur Welle hin verformen und die Welle über die dann wirkenden Klemmkräfte zwischen Kugelpfanne, Kugelklemme und Welle wieder fixieren. (Analog gilt dies auch, wenn statt der Radialfedern andere, per Fluid, elektromechanisch oder in anderer Weise nicht-manuell betätigte Spannmechanismen verwendet und angesteuert werden, um die Kugelpfanne wahlweise gegen die Kugelklemme und die Welle zu klemmen oder davon zu lösen).

Ein zusätzlicher Verfahrensschritt c) nach einer weiteren Ausführungsform des erfindungsgemäßen Verfahrens umfasst die Bearbeitung des Werkstücks, nachdem es in der Ausgleichslage wieder fixiert wurde. Diese Bearbeitung kann insbesondere dazu dienen, etwaige Verformungen beim Übergang in die Ausgleichslage wieder zu korrigieren bzw. das verformte Werkstück auf Sollmaß zu bearbeiten.

Die Verfahrensschritte a) bis c) lassen sich bei Bedarf auch mehrfach wiederholen, um auch solche Eigenspannungen abzubauen, die durch nachgeschaltete Bearbeitungen erneut im Werkstück freigesetzt werden.

Eine besonders vorteilhafte Ausführungsform des Verfahrens sieht vor, dass wenigstens ein Abschnitt des Werkstücks während der Verfahrensschritte a) bis c) über ein festes Spannmittel durchgehend mit dem Maschinenbett verbunden bleibt. Dieser wenigstens eine Abschnitt, der während des gesamten Verfahrens im Wesentlichen ortsfest bleibt, kann als Bezugspunkt für Bearbeitungsschritte dienen, denen das Werkstück nach Einnahme einer Ausgleichslage erneut unterzogen wird. Andere Abschnitte des Werkstücks können dagegen über erfindungsgemäße Kugelspanner lösbar mit dem Maschinenbett verspannt werden. Beim Übergang in den gelösten Zustand bewegen sich die jeweils von einem Kugelspanner getragenen Abschnitte des Werkstücks relativ zu dem wenigstens einen ortsfest eingespannten Abschnitt, der seine Lage nicht verändert.

Die Bearbeitung des Werkstücks kann insbesondere eine spanabhebende Bearbeitung umfassen. Ergänzend oder alternativ kann die Bearbeitung aber auch Schweißen, Kleben, Löten, Biegen, Prägen, Stanzen, Hämmern oder Walzenumformen umfassen.

Das feste Spannmittel, mit dem das Werkzeug in einer Ausführungsform dauerhaft mit dem Maschinenbett verspannt werden soll, kann ebenfalls ein erfindungsgemäßer Kugelspanner sein, der während der einzelnen Verfahrensschritte seinen geklemmten Zustand durchgehend beibehält. Alternativ kann es sich auch um ein anderes, dem Fachmann bekanntes Spannmittel handeln. Bevorzugt denkbar ist der aus dem Stand der Technik bereits bekannte, in der deutschen Patentanmeldung DE 10 2005 033 468 A1 beschriebene Spanntopf.

Obwohl vorzugsweise sowohl Kugelpfanne als auch Kugelklemme eine sphärische Oberfläche zum gegenseitigen Klemmkontakt aufweisen, muss das nicht zwingend so sein. Alternativ kann es genügen, wenn entweder nur die Kugelklemme oder nur die Kugelpfanne eine sphärische Kontaktfläche aufweist, während relativ dazu die jeweils andere Komponente mit einer geeigneten Kontaktfläche daran entlangleiten und zugleich um den Mittelpunkt M geschwenkt werden kann. So könnte beispielsweise die Kugelpfanne statt einer sphärischen Innenoberfläche auch einen oder mehrere, die Kugelklemme eng umlaufende und vorzugsweise geschlitzte Ringelemente aufweisen, die radial verformbar sind. Eine Kugelklemme mit sphärischer Oberfläche könnte auch in eine kreisförmige Öffnung in der Innenseite der Kugelpfanne hineinragen, wobei die Öffnung einen kleineren Durchmesser hat als die sphärische Oberfläche. Im geklemmten Zustand wird dann die Öffnung mit ihrem Rand gegen die Kugelklemme gepresst und geklemmt.

Vorteilhaft lässt sich das Verfahren auch mit mehreren Kugelspannern durchführen, welche das Werkstück an verschiedenen Abschnitten halten. Gerade bei größeren Werkstücken kann das erforderlich sein. Einzelne oder alle Kugelspanner können wahlweise gleichzeitig oder individuell in den geklemmten oder gelösten Zustand überführt werden, um dem jeweiligen Werkstückabschnitt eine Verformung in die Ausgleichslage zu ermöglichen.

Eine Ausführungsform eines erfindungsgemäßen Kugelspanners sowie die Durchführung des erfindungsgemäßen Verfahrens soll nachstehend anhand von Figurenbeispielen näher erläutert werden. Dabei zeigt
- Figur 1: einen erfindungsgemäßen Kugelspanner in perspektivischer Schnittansicht;
- Figur 2: den Kugelspanner aus Figur 1 in geschnittener Seitenansicht, und
- Figur 3 bis 6: den Ablauf des erfindungsgemäßen Verfahrens anhand vereinfachter Seitenansichten in einem Maschinenbett.

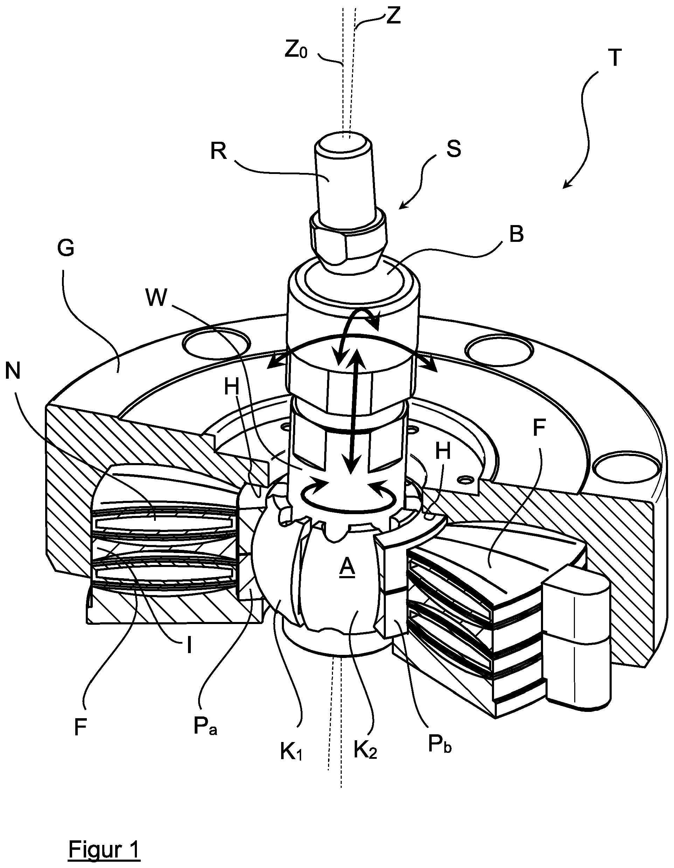

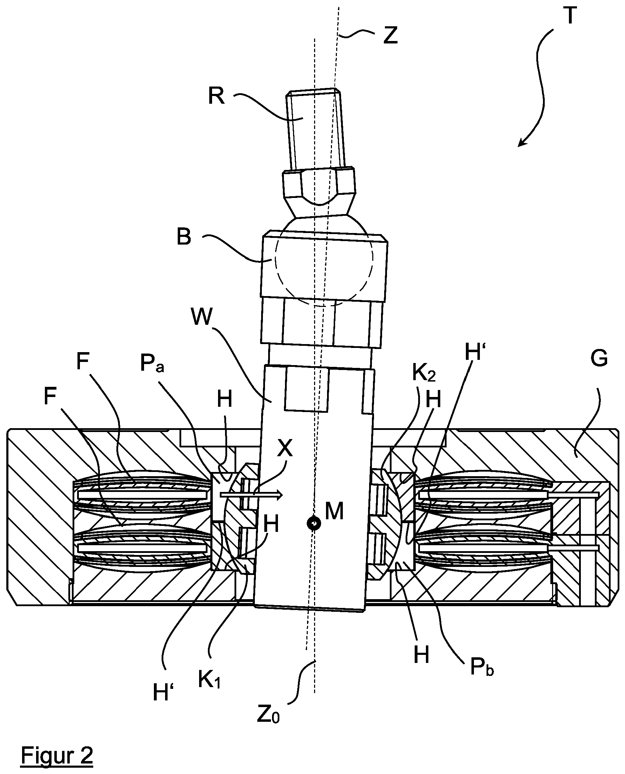

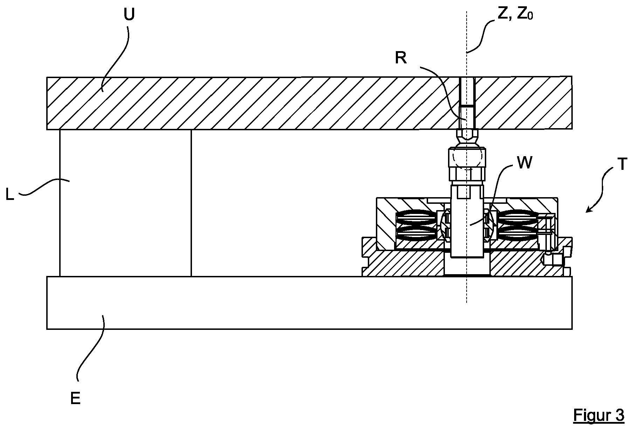

Der in Figur 1 und Figur 2 dargestellte Kugelspanner T umfasst ein Gehäuse G, welches im Wesentlichen rotationssymmetrisch um eine Gehäuseachse Z₀ ausgebildet ist. Über nicht näher dargestellte Spannmittel lässt sich das Gehäuse G auf einem Maschinenbett E festspannen, wie beispielhaft in den Figuren 3 bis 6 zu sehen ist.

Innerhalb des Gehäuses G und um die Gehäuseachse Z₀ herum sind zwei übereinanderliegende Radialfedern F angeordnet, deren Kammern N über nicht näher dargestellte Anschlüsse mit Druckluft beaufschlagbar sind. An ihrem Außenumfang stützen sich die Radialfedern F an einer Innenwand I des Gehäuses G in radialer Richtung nach innen ab. An ihrem Innenumfang schließen die Radialfedern F an eine Kugelpfanne P an, die von mehreren einzelnen, in Umfangsrichtung um die Gehäuseachse angeordnete Kugelpfannenelemente Pₐ, P_{b}... gebildet wird. Die Radialfedern sind so ausgebildet bzw. vorgespannt, dass sie im entspannten Zustand (keine Druckbeaufschlagung der Kammern N) eine maximale radiale Ausdehnung haben und an ihrer radialen Innenseite eine zur Gehäuseachse Z₀ hin wirkende Klemmkraft auf die Kugelpfannenelemente Pₐ, P_{b}... ausüben (geklemmter Zustand). Bei Druckbeaufschlagung der Kammern N dehnen sich die Radialfedern F parallel zur Gehäuseachse Z₀ aus und verkürzen sich gleichzeitig in radialer Richtung, sodass die Klemmkraft auf die Kugelpfannenelemente reduziert oder aufgehoben wird (gelöster Zustand).

Auf ihrer zur Gehäuseachse Z₀ gerichteten Innenseite bilden die Kugelpfannenelemente Pₐ, P_{b}... eine sphärische Fläche zur Anlage an eine Kugelklemme K, die wiederum durch einzelne, um die Gehäuseachse herum angeordnete Kugelklemmelemente K₁, K₂... mit sphärischer Außenfläche gebildet wird. Der Krümmungsmittelpunkt der sphärischen Innenfläche der Kugelpfanne P und der daran eng anliegenden Außenfläche der Kugelklemme K ist der in Figur 2 vereinfacht angedeutete Mittelpunkt M. Die Kugelpfanne P und die Kugelklemme K bilden gemeinsam ein Kugelgelenk dergestalt, dass die Kugelklemme K relativ zur Kugelpfanne P und zum Gehäuse G verschwenkbar ist, solange keine Klemmkraft zwischen Kugelpfanne und Kugelklemme übertragen wird, die zu einer blockierenden Haftreibung zwischen den beiden Komponenten führt. Die Kugelpfannenelemente Pₐ, P_{b}... und die Kugelklemmelemente K₁, K₂... sind in Umfangsrichtung jeweils durch Schlitze voneinander getrennt, sodass sie bei radialer Beaufschlagung durch die Radialfedern jeweils geringfügig zum Zentrum auf die Gehäuseachse Z₀ hin verschoben werden können.

Mit ihrer zur Gehäuseachse Z₀ weisenden Innenseite bilden die einzelnen Kugelklemmelemente gemeinsam eine etwa zylindrische Anlagefläche, die eine zentrisch durch das Gehäuse G geführte, um eine Wellenachse Z ausgebildete Welle eng anliegend umläuft. Im gelösten Zustand üben die Kugelklemmelemente keine relevante Klemmkraft auf die zylindrische Oberfläche der Welle W aus, sodass diese relativ zu den Kugelklemmelementen in Richtung der Wellenachse Z verschieblich ist. Auch eine Schwenkbewegung der Welle W relativ zum Gehäuse G (oder einem das Gehäuse tragenden Maschinenbett E) ist im gelösten Zustand leicht möglich. Im geklemmten Zustand dagegen werden die Kugelpfannenelemente Pₐ, P_{b}... in radialer Richtung (Klemmrichtung X) nach innen gegen die Kugelklemmelemente K₁, K₂... gedrückt, die ihrerseits eine Klemmkraft auf die Welle W ausüben und diese dadurch relativ zum Gehäuse G gegen Verdrehen oder Verschieben fixieren. Die Klemmrichtung X ist für ein Kugelpfannenelement Pₐ in Fig. 2 beispielhaft angedeutet. Natürlich hat jedes Kugelpfannenelement seine eigene, stets zur Gehäuseachse Z₀ gerichtete Klemmrichtung.

Zur spielfreien Führung der Kugelpfannenelemente Pₐ, P_{b}... sind im Gehäuse G zwei einander parallel gegenüberliegende Anschlagflächen H (siehe insbesondere Figur 2) ausgebildet, zwischen denen die Kugelpfannenelemente Pₐ, P_{b} anliegen und in radialer Richtung geführt bzw. in axialer Richtung gestützt werden. Beide Anschlagflächen H sind durch rotationssymmetrische Absätze des Gehäuses gebildet, welche die Gehäuseachse Z₀ umlaufen. Durch die Anschlagflächen H ist sichergestellt, dass die Kugelpfannenelemente Pₐ, P_{b}... senkrecht zur Klemmrichtung X nicht ausweichen können und auch ein Aufweiten bzw. Abflachen der Kugelpfannenelemente Pₐ, P_{b}... unter Druckbeaufschlagung beim Klemmen wird durch die beidseitige Führung verhindert. Im Ergebnis werden die Kugelpfannenelemente Pₐ, P_{b}... formstabil und spielfrei gegen die Kugelklemme K gedrückt. In den sphärischen Innenflächen der Kugelpfannenelemente sitzen die komplementär bzw. formschlüssig dazu geformten Außenflächen der Kugelklemmenelemente K₁, K₂..., sodass auch die Kugelklemmenelemente K₁, K₂ indirekt von den Anschlagflächen H geführt und gestützt sind. Daher ist die ihrerseits von den Kugelklemmenelemente K₁, K₂ geklemmte Welle W in Richtung der Wellenachse Z oder Gehäuseachse Z₀ ebenfalls spielfrei fixiert.

Die in Richtung der Gehäuseachse Z₀ übereinander liegenden Kugelpfannenelemente Pₐ und P_{b} bilden zwischen sich ebenfalls eine Anschlagfläche H', um sich gegenseitig in axialer Richtung zu stützen bzw. stabilisieren.

An einem oberen Ende der Welle W ist ein Befestigungsmittel S in Form eines Kugelgelenks B angeordnet. Ein unterer Abschnitt des Kugelgelenks B ist mit der Welle W (bevorzugt lösbar) verbunden. Ein oberer Abschnitt des Kugelgelenks B trägt einen mit einem Gewinde und einer Schlüsselfläche versehenen Fixierbolzen R. Der Fixierbolzen R ist über das Kugelgelenk B positionsfest, aber schwenkbar mit der Welle W verbunden. Verschiebungen des Fixierbolzens R relativ zur Welle W sind daher nicht möglich, Schwenkbewegungen hingegen schon. Wie insbesondere die Figuren 3 bis 6 zeigen, dient der Fixierbolzen R dazu, ein Werkstück U mit der Welle W zu verbinden, beispielsweise durch Einschrauben des Fixierbolzens R in ein dazu vorgesehenes Gewinde am Werkstück U.

In Figur 1 ist der Kugelspanner T im gelösten Zustand dargestellt. Die Kammern N der Radialfedern F sind druckbeaufschlagt und aufgeweitet, sodass keine ins Zentrum gerichteten Klemmkräfte erzeugt werden. Entsprechend ist die Welle W relativ zum Gehäuse G um ihre Wellenachse Z drehbar, entlang ihrer Wellenachse Z verschieblich und um den Mittelpunkt M frei schwenkbar, was durch die Doppelpfeile angedeutet ist. Die Wellenachse Z kann daher relativ zum Gehäuse G auch geneigt verlaufen und muss nicht mit der Gehäuseachse Z₀ zusammenfallen. Beide Achsen schneiden sich jedoch im Mittelpunkt M.

Figur 2 dagegen zeigt den Kugelspanner T im geklemmten Zustand. Aufgrund der erzielten Klemmwirkung auf die im Zentrum geführte Welle W bestehen die in Figur 1 mit den Doppelpfeilen angedeuteten Freiheitsgrade nun nicht mehr, die Welle W ist stattdessen starr mit dem Gehäuse und dem Maschinenbett verbunden.

Ein Bearbeitungsverfahren unter Nutzung eines erfindungsgemäßen Kugelspanners ist in den Figuren 3 bis 6 vereinfacht dargestellt. In Figur 3 ist ein Werkstück U zur Bearbeitung vorgesehen und dazu an einem Abschnitt über ein festes Spannmittel L mit einem Maschinenbett E verspannt. Diese Einspannung wird während des Verfahrens durchgehend beibehalten und dient als Referenz oder Bezugspunkt für einzelne Bearbeitungsschritte.

Ein vom Spannmittel L entfernter Abschnitt des Werkstücks U ist mit einem Fixierbolzen R verschraubt, der seinerseits gelenkig mit einer Welle W eines erfindungsgemäßen Kugelspanners T verbunden ist. Der Kugelspanner ist am Maschinenbett E eingespannt, und seine Radialfedern sind über nicht näher dargestellte Zuleitungen mit Druckluft beaufschlagbar, um den Kugelspanner Z wahlweise aus einem geklemmten in einen gelösten Zustand und zurück zu überführen. Im gezeigten Beispiel fällt die Wellenachse Z mit der Gehäuseachse Z₀ zunächst zusammen, um den nachfolgenden Übergang von der Spannlage in die Ausgleichslage zu verdeutlichen. Durch Entspannen der Kammern N kann der Kugelspanner T unter Nutzung der in den Radialfedern vorherrschenden Federvorspannung in den geklemmten Zustand übergehen, sodass der vom Kugelspanner T getragene Abschnitt des Werkstücks U stabil eingespannt und für die Bearbeitung bereit ist.

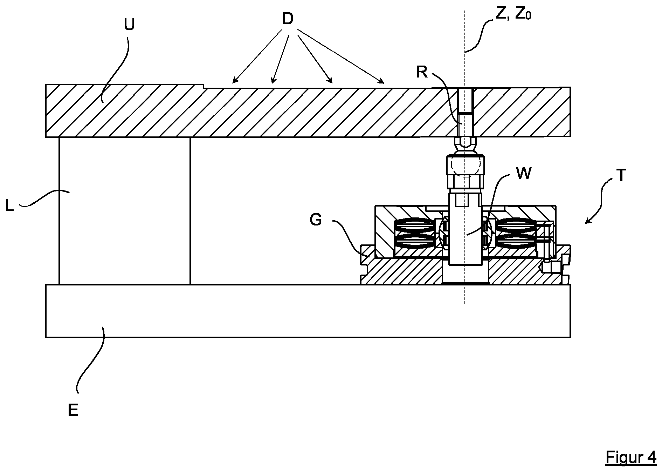

In Figur 4 ist zu sehen, wie das Werkstück U auf einer Oberfläche in einem Bearbeitungsbereich D durch ein spanabtragendes Verfahren bearbeitet wurde. Durch diese Bearbeitung wurden Eigenspannungen frei, die danach trachten, das Werkstück U zu verformen. Aufgrund der Einspannung über den Kugelspanner T wird diese Verformung jedoch noch unterbunden.

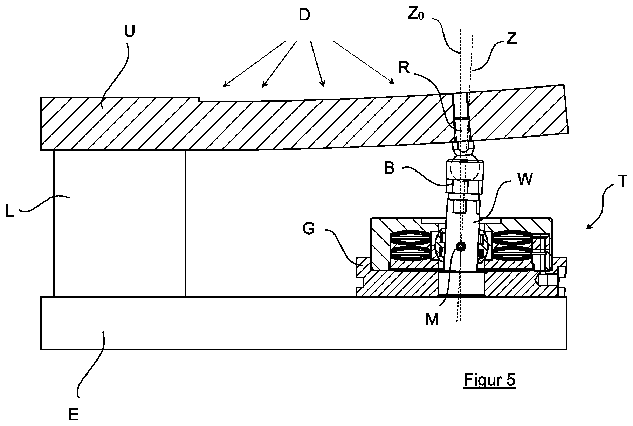

Figur 5 zeigt die Anordnung des Werkstücks U, nachdem der Kugelspanner T erfindungsgemäß in den gelösten Zustand überführt wurde. Dadurch wurde die Klemmung der Welle W aufgehoben und die Einspannwirkung des Kugelspanners T auf das Werkstück U vorübergehend beseitigt. Entsprechend konnte sich das Werkstück U - den frei gewordenen Eigenspannungen folgend - aus der vorherigen Spannlage in eine Ausgleichslage verformen, wie durch die leicht aufwärtsgerichtete Krümmung des Bearbeitungsbereichs D verdeutlicht wird. Über den Fixierbolzen R wurde diese Bewegung über das Kugelgelenk B auf die Welle W übertragen und von dieser mitvollzogen, sodass die Welle W eine neue Position und Ausrichtung relativ zum Gehäuse G einnehmen konnte. Die Wellenachse Z und die Gehäuseachse Z₀ fallen nun nicht mehr zusammen.

In der neuen Ausgleichslage entspricht die Bearbeitung nicht mehr dem Sollmaß, eine Nachbearbeitung ist erforderlich. Dazu muss das Werkstück in der Ausgleichslage erneut fest eingespannt werden, um das Werkstück im Bearbeitungsbereich D erneut bearbeiten zu können. Erfindungsgemäß kann dies auf einfache Weise dadurch geschehen, dass der Kugelspanner T aus dem gelösten wieder in den geklemmten Zustand überführt wird, wobei dadurch die Welle W mit dem von ihr getragenen Werkstückabschnitt automatisch in ihrer neuen Position und Ausrichtung relativ zum Gehäuse G bzw. zum Maschinenbett E fest fixiert wird. Manuelles Eingreifen zum erneuten Einspannen des Werkstücks in seiner geänderten Lage ist vorteilhafterweise nicht erforderlich.

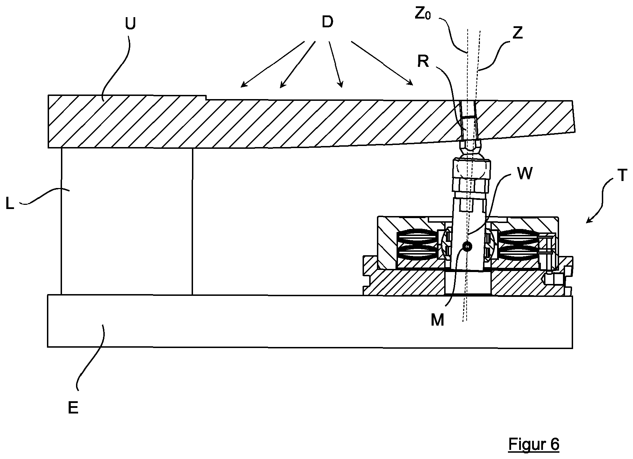

Im so geklemmten Zustand, der in Figur 6 dargestellt ist, kann das Werkstück daher erneut sicher bearbeitet werden, wobei die Nachbearbeitung im Bearbeitungsbereich D nun das Sollmaß erreicht hat. In der Annahme, dass diese Nachbearbeitung keine zusätzlichen Eigenspannungen mehr freigesetzt hat, kann das Werkstück anschließend vom festen Spannmittel L und vom Kugelspanner T gelöst werden, ohne sich dabei erneut zu verformen und unter Beibehaltung des angestrebten Sollmaßes. Alternativ wäre es denkbar, zunächst nur die Einspannung am Kugelspanner T aufzuheben (Übergang in den gelösten Zustand) und das Werkstück U währenddessen auf etwaige weitere Verformungen bzw. Relativbewegungen zu überprüfen. Treten solche erneut auf, können die genannten Verfahrensschritte wiederholt werden, bis das Sollmaß auch im nicht geklemmten Zustand innerhalb vorgegebener Toleranzen liegt.

### Bezugszeichenliste

- A: Außenseite der Kugelklemme
- B: Kugelgelenk
- D: Bearbeitungsbereich
- E: Maschinenbett
- F: Radialfeder
- G: Gehäuse
- H: Anschlagfläche
- I: Gehäuseinnenwand
- K: Kugelklemme
- K₁, K₂...: Kugelklemmelemente
- L: festes Spannmittel
- M: Mittelpunkt einer sphärisch gekrümmten Kugelklemmenaußenseite
- N: Kammer einer Radialfeder
- P: Kugelpfanne
- Pa, Pb...: Kugelpfannenelemente
- R: Fixierzapfen
- S: Befestigungsmittel
- T: Kugelspanner
- U: Werkstück
- W: Welle
- X: Klemmrichtung
- Z: Achse der Welle (W)
- Z₀: Gehäuseachse

## Patentansprüche

1. Kugelspanner (T) zum lösbaren Einspannen von Werkstücken (U), mit einem Gehäuse, welches um eine zentrische Achse Z₀ ausgebildet ist, und
a) mit einer um eine Achse (Z) ausgebildeten Welle (W), die an einem ersten Ende Befestigungsmittel (S) zur Befestigung an dem Werkstück (U) aufweist,
b) und mit einer Kugelklemme (K), welche über Klemmbacken an einem zylindrischen Abschnitt der Welle (W) anliegt und deren der Innenseite abgewandte Außenseite (A) sphärisch um einen auf der Achse (Z) liegenden Mittelpunkt (M) geformt ist,
c) wobei ein Klemmmechanismus mit einer Kugelpfanne (P) vorgesehen ist, welche mit einer Innenseite an der sphärischen Außenseite (A) der Kugelklemme (K) anliegt,
d) und wobei die Kugelpfanne (P) aus einem geklemmten Zustand, in welchem sie die sphärische Außenseite (A) der Kugelklemme (K) mit einer Klemmkraft beaufschlagt, in bzw. entgegen einer orthogonal zur zentrischen Achse (Z₀) verlaufenden, radialen Klemmrichtung (X) in einen gelösten Zustand bewegbar ist, in welchem die Klemmkraft reduziert oder aufgehoben ist,
e) wobei die Welle (W) nicht im geklemmten, aber im gelösten Zustand
i) relativ zur Kugelpfanne (P) in Achsrichtung (Z) verschieblich und/oder um ihre Achse (Z) drehbar
und
ii) um den Mittelpunkt (M) schwenkbar
ist,
f) und wobei die Kugelpfanne mit einer sphärisch geformten Innenseite an der sphärischen Außenseite der Kugelklemme (K) anliegt, und
g) wobei die Kugelpfanne (P) beim Übergang zwischen dem geklemmten und dem gelösten Zustand an wenigstens einer entlang der Klemmrichtung (X) verlaufenden, vorzugsweise orthogonal zur zentrischen Achse Z₀ ausgebildeten Anschlagfläche (H) entlang gleitet, um im geklemmten Zustand die von der Kugelpfanne (P) geklemmte Kugelklemme (K) und mit ihr die Welle (W) gegen eine Bewegung senkrecht zur Anschlagfläche (H) spielfrei zu fixieren,
**dadurch gekennzeichnet,**
h) **dass** die Kugelpfanne mehrere, in Richtung der Gehäuseachse Z₀ übereinander liegende Kugelpfannenelemente (Pa, Pb...) aufweist, und
i) **dass** die Kugelpfanne dazu ausgebildet ist, die Kugelklemme gleichzeitig oberhalb und unterhalb einer Äquatorebene zu beaufschlagen.

2. Kugelspanner (T) nach Anspruch 1, **dadurch gekennzeichnet, dass** die Kugelklemme (K) mehrere, teilweise oder vollständig voneinander getrennte, in Umfangsrichtung um die Welle herum angeordnete Kugelklemmelemente (K1, K2...) umfasst.

3. Kugelspanner (T) nach Anspruch 1 oder 2, **dadurch gekennzeichnet, dass** die Kugelpfanne (P) zur Erzeugung der Klemmkraft von pneumatisch oder hydraulisch betätigbaren Spannmitteln in Richtung auf die Achse (Z) bzw. den Mittelpunk (M) beaufschlagbar ist.

4. Kugelspanner (T) nach einem der vorigen Ansprüche, **dadurch gekennzeichnet, dass** die Kugelpfanne (P) gebildet wird von mehreren, teilweise oder vollständig voneinander getrennten, in Umfangsrichtung um die Kugelklemme herum angeordneten Kugelpfannenelementen (Pa, Pb...).

5. Kugelspanner (T) nach einem der vorigen Ansprüche, umfassend ein Gehäuse (G) zur Anordnung auf einem Maschinenbett,
a) wobei im Gehäuse (G) mit einem Fluid beaufschlagbare und dadurch verformbare Spannmittel in Form von wenigstens einer Radialfeder (F) um die Gehäuseachse (Z₀) herum angeordnet sind,
b) und wobei die Radialfeder (F) mit einem in radialer Richtung inneren Abschnitt in Wirkverbindung mit der Kugelpfanne (P, Pa, Pb...) steht und sich mit ihrem radial äußeren Ende an einer Gehäusewand abstützt,
c) wobei die Radialfeder (F) im geklemmten Zustand eine radial nach innen gerichtete Klemmkraft auf die Kugelpfanne (P, Pa, Pb...) erzeugt, wodurch die von der Kugelpfanne (P, Pa, Pb...) dabei beaufschlagte Kugelklemme (K, K₁, K₂...) die von der Kugelklemme umfasste Welle (W) klemmt und
- gegen Drehbewegungen um die Wellenachse (Z) und
- gegen Schwenkbewegungen um den Mittelpunkt (M), und
- gegen Verschiebungen in Richtung der Wellenachse (Z) relativ zum Gehäuse (G) sichert.

6. Kugelspanner (T) nach einem der vorigen Ansprüche, **dadurch gekennzeichnet, dass** die Befestigungsmittel (S) an der Welle (W) ein Kugelgelenk oder einen Metallbalg mit einem relativ zur Welle (W) schwenkbaren Fixierzapfen (R) umfassen, wobei der Fixierzapfen (R) zur lösbaren Verbindung mit einem zu fixierenden Werkstück ausgebildet ist.

7. Verfahren zum Bearbeiten eines Werkstücks (U), wobei das Werkstück (U) mittels wenigstens eines Kugelspanners (T) nach einem der vorhergehenden Ansprüche über dessen an der Welle (W) angeordnetes Befestigungsmittel (S) relativ zu einem den Kugelspanner (T) tragenden Maschinenbett (E) fixierbar ist, das Verfahren umfassend folgenden Schritt:
a) Überführen des wenigstens einen Kugelspanners (T) aus dem klemmenden in den gelösten Zustand, um es dem Werkstück oder einem Werkstückabschnitt zu ermöglichen, sich ausgehend von einer im geklemmten Zustand eingenommenen Spannlage selbsttätig relativ zum betreffenden Kugelspanner (T) in eine Ausgleichslage zu bewegen und dadurch die in der Spannlage zwischen Werkstück und dem Kugelspanner (T) herrschenden Spannungen zu reduzieren oder aufzuheben.

8. Verfahren nach dem vorherigen Anspruch, wobei nach Verfahrensschritt a) folgender Schritt ausgeführt wird:
b) Überführen wenigstens eines in Schritt a) gelösten Kugelspanners (T) zurück in den geklemmten Zustand, um das Werkstück in der neu eingenommenen Ausgleichlage wieder relativ zum Maschinenbett zu fixieren.

9. Verfahren nach einem der vorhergehenden Verfahrensansprüche, ferner umfassend folgendes Merkmal:
c) Bearbeiten des Werkstücks, während wenigstens ein Kugelspanner (T) im geklemmten Zustand ist, wobei die Bearbeitung umfassen kann: spanabhebende Bearbeitung, Schweißen, Kleben, Löten, Biegen, Prägen, Stanzen, Hämmern, Walzenumformen.

10. Verfahren nach einem der vorhergehenden Verfahrensansprüche, wobei wenigstens ein Abschnitt des Werkstücks über ein festes Spannmittel (L) an dem Maschinenbett fixiert bleibt, während wenigstens ein Kugelspanner (T) gemäß Verfahrensschritt a) und b) gelöst und wieder geklemmt wird.

11. Verfahren nach Anspruch 9 oder 10, wobei die Verfahrensschritte a), b) und c) mehrmals hintereinander durchgeführt werden, bevor das Werkstück aus dem Maschinenbett entnommen wird.

## Claims

1. Spherical clamp (T) for releasably clamping workpieces (U), with a housing which is configured around a central axis Z₀, and
a) a shaft (W) which is configured around an axis (Z), wherein at a first end the shaft comprises clamping means (S) for clamping at the workpiece (U),
b) a ball clamp (K) which abuts a cylindrical portion of the shaft (W) via clamping jaws and whose outer side (A) facing away from the inner side is formed spherically around a centre point (M) on the axis (Z),
c) wherein a clamping mechanism with a spherical socket (P) is provided, wherein an inner side of the spherical socket abuts the spherical outer side (A) of the ball clamp (K),
d) and wherein the spherical socket (P) can be moved from a clamped state, in which it applies a clamping force to the spherical outer surface (A) of the ball clamp (K), into or against a radial clamping direction (X) extending orthogonally to the central axis (Z₀) into a released state in which the clamping force is reduced or eliminated.
e) wherein the shaft (W), not in a clamped state but in a released state,
i) is movable relative to the spherical socket (P) in the axial direction (Z) and/or rotatable about its axis (Z)
and
ii) can be pivoted about the centre point (M),
f) and wherein the spherical socket with a spherically shaped inner side abuts the spherically shaped outer side of the ball clamp (K), and
g) wherein, during the transfer between the clamped state and the released state, the spherical socket (P) slides along at least one stop surface (H) which extends along the clamping direction (X) and which is preferably provided orthogonally to the central axis Z₀, so that in the clamped state, the ball clamp (K) which is clamped by the spherical socket (P) together with the shaft (W), is fixed, free of play, against a movement perpendicular to the stop surface (H),
**characterized in that**
h) the spherical socket comprises several spherical socket elements (Pa, Pb...) which are stacked in the direction of the housing axis Z₀, and
i) the spherical socket is configured to act upon the ball clamp simultaneously above and below an equatorial plane.

2. Spherical clamp (T) according to claim 1, **characterized in that** the ball clamp (K) comprises several ball clamping elements (K1, K2...) which are partially or completely separated from each other and arranged around the shaft in the circumferential direction.

3. Spherical clamp (T) according to claim 1 or 2, **characterized in that**, in order to generate the clamping force, the spherical socket (P) can be acted upon by pneumatically or hydraulically actuated clamping means in the direction of the axis (Z) or the centre point (M).

4. Spherical clamp (T) according to one of the preceding claims, **characterized in that** the spherical socket (P) is formed by several spherical socket elements (Pa, Pb...) which are partially or completely separated from each other and arranged in the circumferential direction around the ball clamp.

5. Spherical clamp (T) according to one of the preceding claims, comprising a housing (G) for arrangement on a machine bed,
a) wherein, in the housing (G), clamping means in the form of at least one radial spring (F), which can be acted upon by a fluid and thereby deformed, are arranged around the housing axis (Z₀),
b) and wherein the radial spring (F) is operatively connected to the spherical socket (P, Pa, Pb...)with an inner portion in the radial direction and is supported at a housing wall by its radial outer end,
c) wherein, in the clamped state, the radial spring (F) generates a clamping force directed radially inwards on the spherical socket (P, Pa, Pb...), whereby the ball clamp (K, K1, K2...) acted upon by the spherical socket (P, Pa, Pb...) clamps the shaft (W) enclosed by the ball clamp and secures it
- against rotation about the shaft axis (Z) and
- against pivoting motion about the centre point (M), and
- against movement in the direction of the shaft axis (Z) relative to the housing (G).

6. Spherical clamp (T) according to one of the preceding claims, **characterized in that** the clamping means (S) comprise a spherical joint or a metal bellows at the shaft (W), with a fixing pin (R) pivotable relative to the shaft (W), wherein the fixing pin (R) is configured to be releasably connected to a workpiece to be clamped.

7. Method for machining a workpiece (U), wherein the workpiece (U) can be fixed relative to a machine bed (E) carrying the spherical clamp (T) by means of at least one spherical clamp (T) according to one of the preceding claims via its clamping means (S) arranged at the shaft (W), the method comprising the following step:
a) transferring the at least one spherical clamp (T) from the clamped state to the released state in order to enable the workpiece or a section of the workpiece to move autonomously from a clamping position assumed in the clamped state into a release position, relative to the respective spherical clamp (T), thereby reducing or eliminating the tensions prevailing in the clamping position between the workpiece and the ball clamp (T).

8. Method according to the preceding claim, wherein the following step is carried out after method step a):
b) transferring the at least one spherical clamp (T) released in step a), back into the clamped state in order to fix the workpiece anew, in its newly assumed release position, relative to the machine bed.

9. Method according to one of the preceding method claims, further comprising the following feature:
c) machining of the workpiece while at least one spherical clamp (T) is in the clamped state, wherein the machining may comprise: cutting, welding, bonding, soldering, bending, embossing, punching, hammering, rolling.

10. Method according to one of the preceding method claims, wherein at least one portion of the workpiece remains fixed to the machine bed via a fixed clamping means (L) while at least one spherical clamp (T) is released and clamped again in accordance with method steps a) and b).

11. Method according to claim 9 or 10, wherein method steps a), b), and c) are carried out repeatedly in succession before the workpiece is removed from the machine bed.

## Revendications

1. Mandrin à bille (T) pour le serrage amovible de pièces à usiner (U), comportant un boîtier qui est réalisé autour d'un axe central Z₀, et
a) comportant un arbre (W) réalisé autour d'un axe (Z), lequel arbre présente des moyens de fixation (S) à une première extrémité pour la fixation à la pièce à usiner (U),
b) et comportant une pince à bille (K) qui s'appuie, par l'intermédiaire de mâchoires de serrage, sur une section cylindrique de l'arbre (W), et dont le côté extérieur (A) opposé au côté intérieur est formé de manière sphérique autour d'un point central (M) situé sur l'axe (Z),
c) dans lequel un mécanisme de serrage comportant un coussinet sphérique (P) est prévu, lequel s'appuie, par un côté intérieur, contre le côté extérieur (A) sphérique de la pince à bille (K),
d) et dans lequel le coussinet sphérique (P) peut être déplacé d'un état serré, dans lequel il sollicite le côté extérieur (A) sphérique de la pince à bille (K) avec une force de serrage, dans ou à l'encontre d'une direction de serrage radiale (X) s'étendant orthogonalement à l'axe central (Z₀), à un état desserré dans lequel la force de serrage est réduite ou supprimée,
e) dans lequel l'arbre (W), à l'état desserré et non à l'état serré,
i) est mobile par rapport au coussinet sphérique (P) dans la direction axiale (Z) et/ou peut tourner autour de son axe (Z)
et
ii) peut pivoter autour du point central (M),
f) et dans lequel le coussinet sphérique s'appuie par un côté intérieur de forme sphérique, sur le côté extérieur sphérique de la pince à bille (K), et
g) dans lequel le coussinet sphérique (P) glisse, lors du passage entre l'état serré et l'état desserré, le long d'au moins une surface de butée (H) s'étendant le long de la direction de serrage (X) et réalisée de préférence orthogonale à l'axe central Z₀, afin de fixer sans jeu, à l'état serré, la pince à bille (K) serrée par le coussinet sphérique (P) et, avec celle-ci, l'arbre (W) à l'encontre d'un mouvement perpendiculaire à la surface de butée (H),
**caractérisé en ce**
h) **que** le coussinet sphérique présente plusieurs éléments de coussinet sphérique (Pa, Pb...) superposés dans la direction de l'axe de boîtier Z₀, et
i) **que** le coussinet sphérique est réalisé pour solliciter la pince à bille de manière concomitante au-dessus et en dessous d'un plan équatorial.

2. Mandrin à bille (T) selon la revendication 1, **caractérisé en ce que** la pince à bille (K) comprend plusieurs éléments de pince à bille (K1, K2...) partiellement ou totalement séparés les uns des autres et agencés autour de l'arbre dans la direction circonférentielle.

3. Mandrin à bille (T) selon la revendication 1 ou 2, **caractérisé en ce que** le coussinet sphérique (P) peut être sollicité en direction de l'axe (Z) ou du point central (M) par des moyens de serrage à actionnement pneumatique ou hydraulique pour produire la force de serrage.

4. Mandrin à bille (T) selon l'une des revendications précédentes, **caractérisé en ce que** le coussinet sphérique (P) est construit par plusieurs éléments de coussinet sphérique (Pa, Pb...) partiellement ou totalement séparés les uns des autres et agencés dans la direction circonférentielle autour de la pince à bille.

5. Mandrin à bille (T) selon l'une des revendications précédentes, comprenant un boîtier (G) destiné à être agencé sur un banc de machine,
a) dans lequel des moyens de serrage pouvant être alimentés en fluide et ainsi déformables sont agencés dans le boîtier (G) sous la forme d'au moins un ressort radial (F) autour de l'axe de boîtier (Z₀),
b) et dans lequel le ressort radial (F) est en liaison fonctionnelle avec le coussinet sphérique (P, Pa, Pb...) par une section intérieure dans la direction radiale, et s'appuie, par son extrémité radialement extérieure, sur une paroi de boîtier,
c) dans lequel le ressort radial (F) produit, à l'état serré, une force de serrage dirigée radialement vers l'intérieur sur le coussinet sphérique (P, Pa, Pb...), moyennant quoi la pince à bille (K, K₁, K₂...), ainsi sollicitée par le coussinet sphérique (P, Pa, Pb...), serre l'arbre (W) qu'elle entoure et le sécurise
- contre des mouvements de rotation autour de l'axe d'arbre (Z) et
- contre des mouvements de pivotement autour du point central (M), et
- contre des déplacements dans la direction de l'axe d'arbre (Z) par rapport au boîtier (G).

6. Mandrin à bille (T) selon l'une des revendications précédentes, **caractérisé en ce que** les moyens de fixation (S) sur l'arbre (W) comprennent un joint à bille ou un soufflet métallique comportant un tourillon de fixation (R) pouvant pivoter par rapport à l'arbre (W), dans lequel le tourillon de fixation (R) est réalisé pour être relié de manière amovible à une pièce à usiner à fixer.

7. Procédé permettant l'usinage d'une pièce à usiner (U), dans lequel la pièce à usiner (U) peut être fixée, par le biais d'au moins un mandrin à bille (T) selon l'une des revendications précédentes par l'intermédiaire de son moyen de fixation (S) agencé sur l'arbre (W), par rapport à un banc de machine (E) portant le mandrin à bille (T), le procédé comprenant l'étape suivante :
a) passage de l'au moins un mandrin à bille (T) de l'état serré à l'état desserré, afin de permettre à la pièce à usiner ou à une section de pièce à usiner de se déplacer automatiquement, en partant d'une position de serrage adoptée à l'état serré, par rapport au mandrin à bille (T) concerné, à une position d'équilibrage et de réduire ou de supprimer ainsi les tensions qui existent, dans la position de serrage, entre la pièce à usiner et le mandrin à bille (T).

8. Procédé selon la revendication précédente, dans lequel, après l'étape de procédé a), l'étape suivante est exécutée :
b) passage d'au moins un mandrin à bille (T) déserré à l'étape a) de nouveau à l'état serré, afin de fixer à nouveau la pièce à usiner par rapport au banc de machine dans la position d'équilibrage nouvellement adoptée.

9. Procédé selon l'une des revendications de procédé précédentes, comprenant en outre la caractéristique suivante :
c) usinage de la pièce à usiner pendant qu'au moins un mandrin à bille (T) est dans l'état serré, dans lequel l'usinage peut comprendre : usinage par enlèvement de copeaux, soudage, collage, brasage, pliage, estampage, poinçonnage, martelage, formage par rouleaux.

10. Procédé selon l'une des revendications de procédé précédentes, dans lequel au moins une section de la pièce à usiner reste fixée sur le banc de machine par l'intermédiaire d'un moyen de serrage fixe (L), tandis qu'au moins un mandrin à bille (T) est desserré et serré à nouveau conformément aux étapes de procédé a) et b).

11. Procédé selon la revendication 9 ou 10, dans lequel les étapes de procédé a), b) et c) sont exécutées plusieurs fois de suite avant que la pièce à usiner ne soit retirée du banc de machine.
